Europäisches Patentamt

European Patent Office

Office européen des brevets

(19)

(11) Veröffentlichungsnummer: **0 098 563**
A1

(12) # EUROPÄISCHE PATENTANMELDUNG

(21) Anmeldenummer: **83106468.8**

(22) Anmeldetag: **02.07.83**

(51) Int. Cl.³: **B 23 K 31/10**, B 23 K 7/10, B 23 K 28/00

(30) Priorität: **09.07.82 DE 3225673**

(43) Veröffentlichungstag der Anmeldung: **18.01.84** Patentblatt 84/3

(84) Benannte Vertragsstaaten: **AT BE CH FR GB IT LI LU NL SE**

(71) Anmelder: **Firma Fritz Freier, Falltorstrasse 16, D-8740 Bad Neustadt (DE)**

(72) Erfinder: **Freier, Hans-Jürgen, Hauptstrasse, D-8744 Mellrichstadt (DE)**

(74) Vertreter: **Wolf, Günter, Dipl.-Ing., Patentanwälte Dipl. Ing. Amthor Dipl.-Ing. Wolf Postfach 700245 An der Mainbrücke 16, D-6450 Hanau 7 (DE)**

(54) **Vorrichtung zum Einbringen von Sieblöchern.**

(57) Die Vorrichtung zum Einbringen von Sieblöchern mit zur Siebaustrittsseite divergierenden Flanken in Bleche, insbesondere hartplattierte Bleche durch Trennschneiden, insbesondere Plasmaschneiden, besteht aus mindestens einem in einem Brennerverstellhalter angeordneten Brenner, wobei der Brennerhalter in einem längs- und querverstellbaren Träger angeordnet ist.

Zwecks Vereinfachung der Brennerhalterung, einer wakkelfreien Führung und Zugänglichmachung für eine elektronische Steuerung ist der steuerbare Brennerhalter (1) in Form einer Scheibe (2) motorisch drehbar am Träger (3) gelagert. Der Brenner (4), die Scheibe (2) durchgreifend, ist in dieser geneigt angeordnet. Mit seiner Längsachse (5) steht der Brenner (4) in einer Ebene, die die Drehachse (6) des Brennerhalters (1) bzw. der Scheibe (2) schneidet.

EP 0 098 563 A1

- 1 -

Vorrichtung zum Einbringen von
Sieblöchern
============================

Die Erfindung betrifft eine Vorrichtung zum Einbringen
von Sieblöchern gemäß Oberbegriff des Hauptanspruches.

Vorrichtungen der genannten Art sind nach der DE-OS
29 o5 233 bekannt. Um den Trennschnitt zur Herstellung
der Sieblöcher von der hartplattierten Sieboberfläche
aus in das weichere Blech gegen die Vertikale in Richtung der gewünschten Flankenneigung längs der vorgegebenen Öffnungskontur führen zu können, ist der Halter
bzw. der Brenner in mindestens drei Freiheitsgraden beweglich steuerbar gelagert. Der Brenner ist dabei in
mindestens einer kardanischen Aufhängung als Halter gelagert und mit einem die Verstellbewegungen vermittelnden Stellelement verbunden, wobei der Halter aus einem
oberen und einem unteren Kreuzgelenk gebildet ist, die
am inneren Gelenkglied des oberen und am äußeren Gelenkglied des unteren Kreuzgelenkes starr miteinander verbunden sind und das Stellelement und das untere Kreuzgelenk mit Dreh- und Querbewegungen vermittelnden Stellmotoren in Wirkverbindung stehen.

Es hat sich gezeigt, daß sich mit einer derart ausgebildeten Vorrichtung Sieblöcher in hartplattierte Bleche
von der harten Seite aus mit zur weichen Austrittsseite
hin divergierendenFlanken einbringen lassen, aber einmal ist die Konstruktion dieser Vorrichtung ziemlich
aufwendig und auch bis zu einem gewissen Grad "wacklig",
was sich insbesondere auch daran bemerkbar macht, daß
sich keine weitgehend"glatten" Flankenwände der sich
nach unten erweiternden Sieblöcher erzielen lassen.
Aufgrund der diffizilen Halterkonstruktion ist diese
außerdem auch nicht ohne weiteres einer an sich wünschenswerten Steuerelektronik zugänglich.

Der Erfindung liegt demgemäß die Aufgabe zugrunde, die
Vorrichtung der eingangs genannten Art dahingehend
zu verbessern, daß der eigentliche Halter für den Brenner praktisch auf nur ein Element reduziert ist, so
daß sich dies eine Element gut, sicher und einfach lagern und damit auch gut mit einer relativ wenig aufwendigen Elektronik steuern läßt.

Diese Aufgabe ist mit einer Vorrichtung der eingangs
genannten Art nach der Erfindung durch das im Kennzeichen des Hauptanspruches Erfaßte gelöst. Vorteilhafte Weiterbildungen ergeben sich nach den Unteransprüchen.

Durch diese Ausbildung der Vorrichtung fallen sämtliche kardanische Aufhängungen, Kreuzgelenke und Stellelemente weg und sind durch eine einzige, motorisch
drehbare Scheibe ersetzt, in der der Brenner im Sinne
der Flankenneigung des herzustellenden Siebloches
sitzt, d.h. diesem Halter ist lediglich eine Dreheinstellbewegung zu vermitteln, was noch näher erläutert
wird.

Dieser Halter sitzt natürlich in einem Traggestell
über dem Arbeitstisch, auf dem das hartplattierte, in
ein Siebblech umzuwandelne Blech liegt. Das Traggestell ist dabei in bekannter Weise so ausgebildet, daß
der Halter mit dem Brenner, ebenfalls entsprechend
gesteuert, längs und quer verschoben werden kann.

Die Steuerung der ganzen Vorrichtung orientiert sich
dabei an einer Konturverlaufsvorlage, die sich neben
dem Arbeizstisch befindet und deren einzelne Konturverlaufskurven mittels einer an sich bekannten Optik abgetastet werden. Richtungsänderungen im Konturverlauf
der Vorlage folgt die Optik durch Drehung, welche Drehung über die Elektronik und einen Stellmotor dem Brennerhalter und damit dem an diesem geneigt angeordneten
Brenner vermittelt werden.

Der Brenner kann bezüglich seiner Neigung an der Scheibe einstellbar angeordnet sein, um erforderlichenfalls
mit der gleichen Vorrichtung andere Flankenneigungen
herstellen zu können, was aber nichts mit der Steuerbewegung zu tun hat, da an einem Blech alle Löcher
selbstverständlich die gleiche Flankenneigung haben.

Ferner kann der Brenner in der Scheibe um seine Längsachse drehbar gelagert sein, was nur indirekt mit der
Steuerung etwas zu tun hat und zwar insofern, als sich
ja die Scheibe von Zeit zu Zeit dreht, was zwangsläufig mit einer Verdrehung der Betriebsmittelzufuhrleitungen zum Brenner verbunden ist. Durch diese Drehlagerung in Bezug auf seine Längsachse können aber die
Betriebsmittelzufuhrleitungen praktisch ohne Eigenverdrehung dem Brenner folgen und müssen nicht so lang
gehalten werden, wie sonst erforderlich und außerdem
muß dadurch der Brenner nach Abschluß eines Konturdurchlaufes nicht zurückgedreht werden.

Die erfindungsgemäß Vorrichtung wird nachfolgend anhand der zeichnerischen Darstellung von Ausführungsbeispielen näher erläutert.

Es zeigt schematisch

Fig. 1 einen Schnitt durch ein Siebloch in einem Blechabschnitt;

Fig. 2 in Draufsicht mehrere unterschiedliche Sieblochformen;

Fig. 3 vereinfacht eine Gesamtdraufsicht auf eine Einrichtung zur Herstellung der Sieblochfläche;

Fig. 4 im Schnitt die erfindungsgemäße Vorrichtung und

Fig. 5 eine andere Ausführungsform der Vorrichtung.

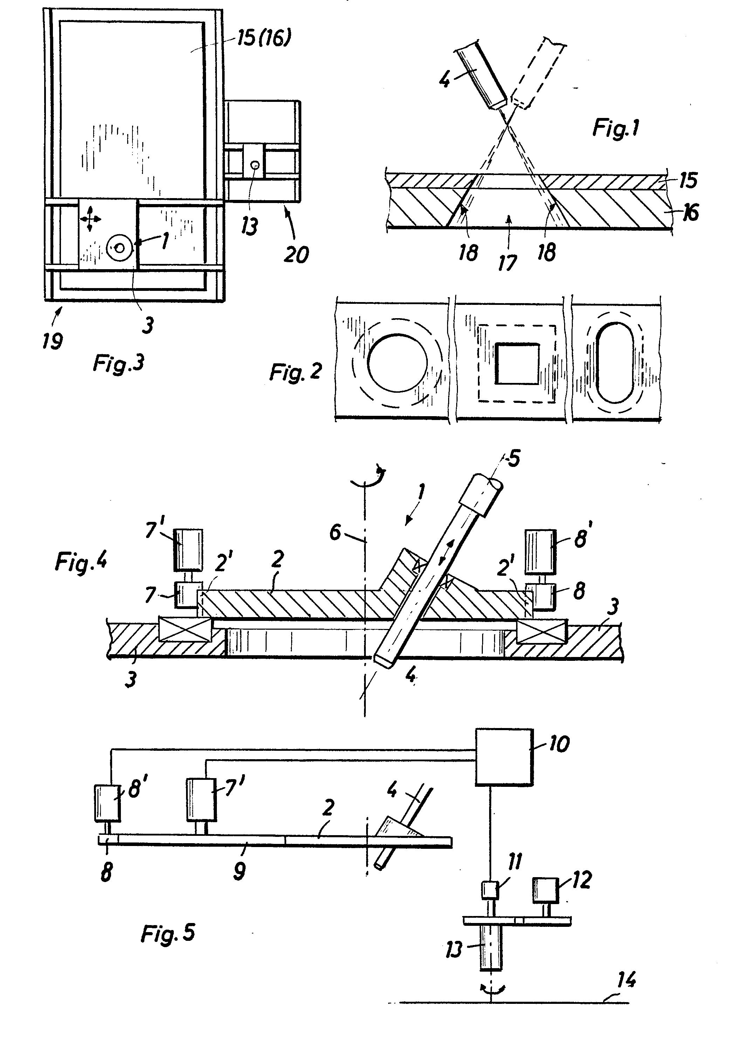

Mit der Vorrichtung bzw. dem Brenner 2, der vorzugsweise ein Plasmabrenner ist, sollen von der Seite der Hartplattierung 15 aus durch diese und die weichere Grundplatte 16 Sieblöcher 17 mit geneigten und zur Siebaustrittsseite hin divergierenden Flankenwände 18 eingeschnitten werden. Wie aus Fig. 1 erkennbar, ist aus diesem Grunde der Brenner 2 entsprechend geneigt angeordnet. Beispiele von Sieblochkonturen bzw. Sieblochformen sind in Fig. 2 dargestellt, woraus erkennbar wird, daß die Neigung des Brenners 2 beim Durchlaufen bezüglich ihres Neigungswinkels gleich bleibt
der Konturen und beim Richtungswechsel zwar bezüglich
ihrer Stellung aber geändert werden muß, welche Veränderung bei einem kreisförmigen Loch stetig erfolgt,
bei einem eckigen Loch nur an den Ecken und bei einem
Langloch stetig in den beiden halbkreisförmigen Bereichen.

Wie aus Fig. 3 erkennbar, kann die gesamte Fläche der
Platte 15,16 mit dem Brenner 2 erreicht werden, d.h.
der Träger 3 für den Brennerhalter 1 ist im Sinne des
Pfeilkreuzes durch nicht dargestellte Stellmotoren verstellbar.

Neben dem Arbeitstisch 19 ist ein                Vorlagentisch 2o mit der Abtastoptik 13 angeordnet.

Gemäß Fig. 4 besteht die Vorrichtung im wesentlichen
aus der motorisch drehbar gelagerten Scheibe 2, in
der der Brenner 4, wie dargestellt, geneigt angeordnet ist. Nicht dargestellt sind die Mittel, mit denen
gewünschtenfalls die Neigung des Brenners 4 verstellt
werden kann und auch die nicht, die eine Verstellung
in Richtung der Längsachse 5 zulassen, da diese Möglichkeiten zwar vorteilhaft, aber nicht unbedingt
zwingend erforderlich sind.

Bspw. wäre es auch möglich, einfach eine andere Scheibe mit einer anderen Brennerstellung vorzusehen bzw. auszutauschen.

Aus den vorerwähnten Gründen der hier nicht dargestellten Betriebsmittelzufuhrleitungen zum Brenner 4 kann dieser zweckmäßig um seine Längsachse 5 drehbar gelagert sein.

Wegen der Betriebsmittelzufuhrleitung und der zu berücksichtigenden Drehung des Ganzen, müßte man normalerweise Antriebsmotor 8 und Drehfühler 7 ziemlich hoch über der Scheibe 2 anordnen, damit sich diese Elemente beim Drehen nicht gegenseitig im Wege sind.

Aus diesem Grunde ist die Scheibe 2 mit einer Außenverzahnung 2' versehen.
Dadurch können, durch Ritzel 7,8 in Wirkverbindung stehend, der Stellmotor 8' und der Drehfühler 7' unmittelbar, wie dargestellt, neben der Scheibe 2 angeordnet werden, ohne die nach oben abgehenden Betriebsmittelzuleitungen zu behindern.

Man kann aber auch den Stellmotor 8' und den Drehfühler 7' ganz aus dem Bereich der Scheibe 2 herausbringen, indem man die Außenverzahnung 2' der um die Achse 6 drehbaren Scheibe 2 mit einer gleich großen Scheibe 9
kämmen läßt, der dann der Stellmotor 8' und der Drehfühler 7' wie bspw. dargestellt, zugeordnet sind.

Unabhängig davon wird insbesondere aus Fig. 4 deutlich,
wie einfach die ganze Vorrichtung gegenüber vorbekannten Haltevorrichtungen geworden ist, wobei vor allem
die stabile Lagerung besticht, die eine verwacklungsfreie Führung des Brenners 4 gewährleistet, wobei die
relativ komplizierten Raumwendungsbewegungen des Brenners 4 unter Beibehaltung seines Neigungswinkels einfach durch eine entsprechende Drehung der Scheibe 2
umgesetzt werden, was sich von der Abtastbewegung der
Abtastoptik 13, die lediglich in Senkrechtstellung
der vorgegebenen Lochkontur auf der Vorlage 14 nachfährt, die natürlich auf einem entsprechenden Trägergestell über dem Vorlagentisch 2o sitzt, mittels einer
relativ einfachen Elektronik 1o bewirken läßt.

Eine solche Abtastoptik 13 ist an sich bekannt und
sei nur der Vollständigkeit halber kurz beschrieben.

Die Abtastoptik steht über Ritzel mit einem kleinen
Stellmotor in Verbindung, der bei Richtungswechsel
in der zu verfolgenden Vorlagenkontur die Optik entsprechend dreht. Dieser Drehbewegung folgt ein Fühler 11

0098563

- 9 -

bspw. in Form eines Drehpotentiometers, das mit der
Elektronik 1o in Verbindung steht, mit der auch der
Stellmotor 8' und der Fühler 7' der Scheibe 2 elektrisch in Verbindung stehen.

Die Vorlage 14 enthält das ganze in die Platte 15,16
einzubringende Sieblochmuster, wobei nacheinander
sämtliche vorgezeichnete Sieblochkonturen abgefahren
werden, was jeweils von einer entsprechenden Brennerbewegung begleitet wird. Die Vorrichtung bzw. die ganze
Anlage kann aber gegf. auch voll NC-gesteuert sein.

0098563.8

- 1 -

Patentansprüche:

1. Vorrichtung zumEinbringen von Sieblöchern mit zur
   Siebaustrittsseite divergierenden Flanken in Bleche,
   insbesondere hartplattierte Bleche durch Trennschneiden, insbesondere Plasmaschneiden, bestehend
   aus mindestens einem in einem Brennerverstellhalter
   angeordneten Brenner, wobei der Brennerhalter in
   einem längs- und querverstellbaren Träger angeordnet
   ist, d a d u r c h   g e k e n n z e i c h n e t,
   daß der steuerbare Brennerhalter (1) in Form einer
   Scheibe (2) motorisch drehbar am Träger (3) gelagert
   und der Brenner (4), die Scheibe (2) durchgreifend,
   in dieser geneigt und mit seiner Längsachse (5) in
   einer Ebene angeordnet ist, die die Drehachse (6)
   des Brennerhalters (1) bzw. der Scheibe (2) schneidet.

2. Vorrichtung nach Anspruch 1, d a d u r c h
   g e k e n n z e i c h n e t, daß der Brenner (4)/*
   neigungseinstellbar am Brennerhalter (1) bzw. der
   Scheibe (2) gelagert ist.
   /* in Bezug auf die Drehachse (6)

3. Vorrichtung nach Anspruch 1 und/oder 3,
dadurch gekennzeichnet, daß
der Brenner (4) im Brennerhalter (1) um seine
Längsachse (5) drehbar gelagert ist.

4. Vorrichtung nach einem der Ansprüche 1 bis 3,
dadurch gekennzeichnet, daß
der Brenner (4) in der Scheibe (2) in Richtung
seiner Längsachse (5) verstellbar angeordnet ist.

5. Vorrichtung nach einem der Ansprüche 1 bis 4,
dadurch gekennzeichnet, daß
die Scheibe (2) mit einer Außenverzahnung (2')
versehen ist.

6. Vorrichtung nach Anspruch 5, dadurch
gekennzeichnet, daß an der Außenverzahnung (2') zwei mit dieser kämmende Ritzel
(7,8) angeordnet sind, die an den Stellwellen
eines Stellmotors (8') und eines Stellfühlers (7'),
wie Drehpotentiometer od. dgl. sitzen.

7. Vorrichtung nach Anspruch 5, dadurch
gekennzeichnet, daß an der Außenverzahnung (2') der Scheibe (2) eine weitere, mit
dieser kämmende, gleich große Scheibe (9) angeordnet ist, die in Wirkverbindung mit einem
Stellmotor (8') und einem Stellfühler (7'), wie
Drehpotentiometer od. dgl. steht.

0098563

Fig.1

Fig.3

Fig.2

Fig.4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-A-2 905 233 (F. FREIER) * Ansprüche; Figuren * | 1 | B 23 K 31/10 B 23 K 7/10 B 23 K 28/00 |
| | --- | | |
| Y | GB-A- 846 353 (SCHICHAU AG) * Figuren; Seite 2, Zeilen 105-112 * | 1 | |
| A | | 2,5,6 | |
| | --- | | |
| Y | DD-B- 126 463 (E. PUSCHMANN) * Ansprüche; Figuren * | 1 | |
| A | | 2-4 | |
| | --- | | |
| Y | US-A-3 417 979 (H.E. CABLE et al.) * Vollständiges Dokument * | 1 | RECHERCHIERTE SACHGEBIETE (Int. Cl. ³) |
| A | | 2-5 | B 23 K 7/00 B 23 K 28/00 |
| | --- | | B 23 K 31/00 |
| A | US-A-3 878 742 (H. LAHM) * Spalte 5, Zeilen 6-9; Figur 1 * | 6 | B 23 Q 21/00 |
| | ----- | | |

Der vorliegende Recherchenbericht wurde für alle Patentansprüche erstellt.

| Recherchenort BERLIN | Abschlußdatum der Recherche 23-09-1983 | Prüfer WUNDERLICH J E |
|---|---|---|